# EUROPÄISCHE PATENTANMELDUNG

(11) **EP 0 677 724 A1**
(43) Veröffentlichungstag der Anmeldung: **18.10.1995**
(21) Anmeldenummer: 95100926.5
(22) Anmeldetag: 25.01.1995
(51) Int. Cl.: G01K 1/06

(54) **Heizkostenverteiler mit verbesserter Ablesung**

(30) Priorität: 14.04.1994 DE 9406177 U
(71) Anmelder: TECHEM AG, D-60528 Frankfurt (DE)
(72) Erfinder: Klein, Joachim, D-64807 Dieburg (DE)
(74) Vertreter: Schubert, Siegmar, Dipl.-Ing.

(57) **Zusammenfassung**

Elektronischer Heizkostenverteiler mit verbesserter Ablesung, wobei das Anzeigefenster (4) für die Verbrauchswerte an der oberen Stirnwand (3) des Gehäuses vorgesehen ist und mit der Rückwand (1) des Gehäuses einen spitzen Winkel (α) einschließt.

## Beschreibung

Die Erfindung betrifft einen vorzugsweise elektronischen Heizkostenverteiler mit einem Gehäuse mit einem Anzeigefenster für die Verbrauchswerte.

Bei üblichen derartigen Heizkostenverteilern ist das Anzeigefenster im oberen Bereich der Vorderwand des Gehäuses angeordnet. Damit ist aber der Nachteil verbunden, daß die im Anzeigefenster erscheinenden Daten nicht in allen Situationen gut abgelesen werden können. Hier ist zu berücksichtigen, daß derartige Heizkostenverteiler üblicherweise im oberen Drittel an einem Heizkörper befestigt sind, d.h. fühlbar unter der Augenhöhe einer stehenden Person, die die Verbrauchswerte abliest. Auch gibt es häufig Situationen, bei denen die Verbrauchswerte des Heizkostenverteilers nicht direkt abgelesen werden können, weil ein Gegenstand vor dem Heizkostenverteiler steht, beispielsweise ein Schreibtisch oder ein anderes Möbelstück. In diesen Fällen behilft man sich mit einer Ablesung über einen Spiegel.

Ausgehend von diesem Stand der Technik liegt daher der Erfindung die Aufgabe zugrunde, einen Heizkostenverteiler vorzuschlagen, der unter allen praktisch vorkommenden Bedingungen optimal abgelesen werden kann.

Zur Lösung dieser Aufgabe ist die Erfindung dadurch gekennzeichnet, daß das Anzeigefenster an der oberen stirnwand des Gehäuses vorgesehen ist und mit der Rückwand des Gehäuses einen spitzen Winkel einschließt.

Durch diese Maßnahmen werden die im Anzeigefenster dargebotenen Daten unter üblichen Bedingungen von einer stehenden Person fühlbar besser ablesbar, d.h. die der Person erscheinende relative Höhe der angezeigten Daten (Ziffern) ist unter den üblichen Bedingungen fühlbar größer als beim Stand der Technik. Auch wird eine Spiegelablesung ganz wesentlich verbessert.

Überlegungen, die weiter unten noch näher ausgeführt werden, haben ergeben, daß für den erwähnten Winkel Werte um 45° optimal sind. Die Unteransprüche geben hierfür bevorzugte Bereiche an.

Die Erfindung wird im folgenden anhand eines Ausführungsbeispiels näher erläutert, aus dem sich weitere wichtige Merkmale ergeben. Es zeigt:
- Fig. 1: perspektivisch einen erfindungsgemäßen elektronischen Heizkostenverteiler;
- Fig. 2: ein Diagramm, wobei für verschiedene Winkel über der Ableseentfernung (in Metern) die relative Ziffernhöhe aufgetragen ist, wie sie dem Ableser erscheint, und
- Fig. 3: ein Diagramm entsprechend Fig. 2, wobei die wirksame Displaygröße bei Spiegelablesung dargestellt ist.

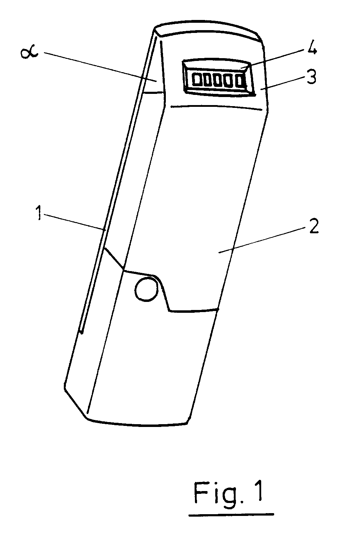

Der in Fig. 1 gezeigte Heizkostenverteiler hat ein Gehäuse mit einer Rückwand 1, einer Vorderwand 2 und einer oberen Stirnwand 3. In der oberen Stirnwand befindet sich ein Ablesefenster 4, das parallel zur oberen Stirnwand angeordnet ist.

Die obere Stirnwand und damit das Ablesefenster schließen mit der Rückwand einen Winkel α ein.

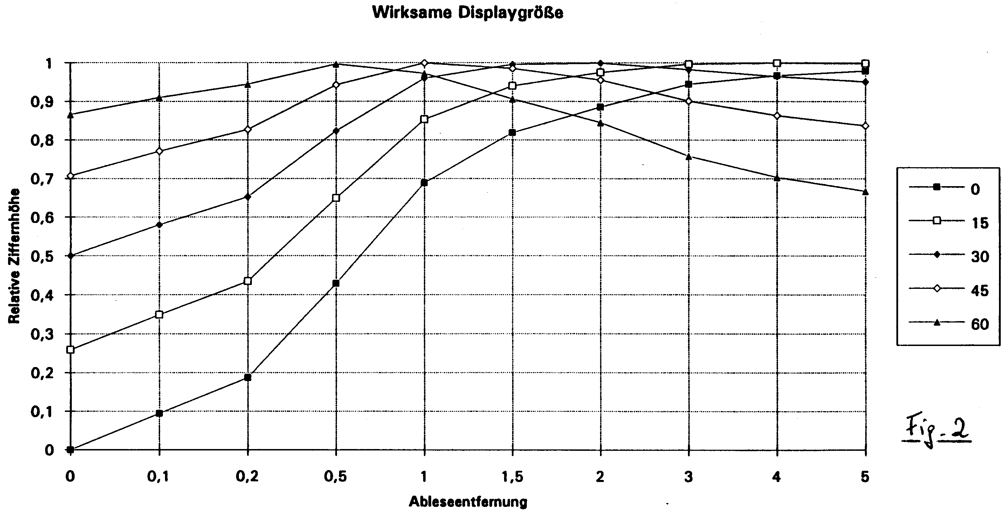

In Fig. 2 ist für verschiedene Winkel α (von 0° bis 60°) die relative Ziffernhöhe aufgetragen, wie sie einem stehenden Betrachter erscheint, der das im Fenster 4 erscheinende Display in einem bestimmten Abstand abliest.

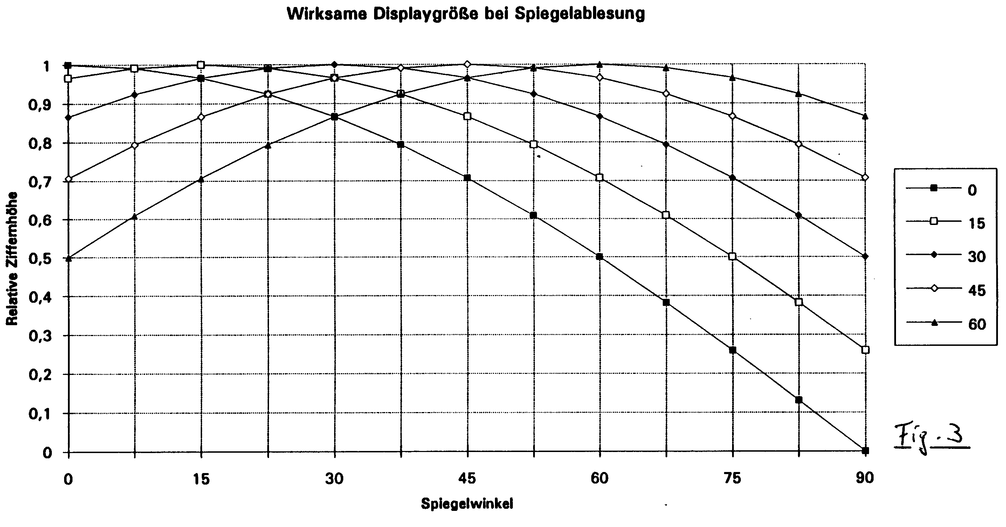

Fig. 3 zeigt die wirksame Displaygröße bei Spiegelablesung, wobei ebenfalls für verschiedene Winkel (hier ebenfalls zwischen 0° und 60°) die relative Ziffernhöhe aufgetragen ist, und zwar hier über verschiedenen Spiegelwinkeln.

Dabei wurde vorausgesetzt, daß der Heizkostenverteiler in einer Höhe von ca. 0,5 bis 0,7 m über dem Boden montiert ist und daß die Augenhöhe des Ablesers bei 1,65 m liegt. (Entsprechend einer Körpergröße von etwa 1,75 m.)

Die folgende Tabelle gibt für verschiedene Displaywinkel die Optimalentfernung und den Bereich an, bei dem die relative Ziffernhöhe 85 % beträgt.

| Displaywinkel | Optimalentfernung | 85 % Bereich |
|---|---|---|
| 0 | ∝ | 1,70 bis ∝ |
| 15 | 4,0 m | 1,00 bis ∝ |
| 30 | 1,8 m | 0,56 bis ∝ |
| 45 | 1,0 m | 0,22 m bis 4,14 m |
| 60 | 0,6 m | 0,00 m bis 1,95 m |

Es ergibt sich, daß beim Standard-Ablesefall (Entfernung zwischen dem Heizkostenverteiler und dem Ableser ca. 0,5m bis 1m) und bei der Spiegelablesung (Entfernung ca. 20 cm) ein Displaywinkel α von 45° als optimal erweist.

Ein größerer Winkel von beispielsweise 60° verschlechtert die Ablesung bei höher eingebautem Heizkostenverteiler und kleinere Winkel versagen bei der Spiegelablesung.

Dieses Ergebnis wird auch deutlich bei Betrachtung der Fig. 2 und 3, woraus ebenfalls hervorgeht, daß Displaywinkel um 45°, evtl. auch um etwa 40°, die optimalen Ergebnisse für alle Situationen liefern.

## Patentansprüche

1. Heizkostenverteiler, vorzugsweise elektronischer Heizkostenverteiler, mit einem Gehäuse mit einem Anzeigefenster für die Verbrauchswerte,
**dadurch gekennzeichnet,**
daß das Anzeigefenster (4) an der oberen Stirnwand (3) des Gehäuses vorgesehen ist und mit der Rückwand (1) des Gehäuses einen spitzen Winkel (α) einschließt.

2. Heizkostenverteiler nach Anspruch 1,
**dadurch gekennzeichnet,**
daß der Winkel (α) etwa zwischen 35° und 50° beträgt.

3. Heizkostenverteiler nach Ansprauch 2,
**dadurch gekennzeichnet**,
daß der Winkel (α) etwa zwischen 40° und 45° beträgt.
